# EUROPEAN PATENT APPLICATION

(11) **EP 4 786 370 A1**
(43) Date of publication of application: **05.08.2026**
(21) Application number: 25155716.1
(22) Date of filing: 04.02.2025
(51) Int. Cl.: B65G 1/04

(54) **ROBOTIC VEHICLE**

(71) Applicant: AutoStore Technology AS, 5578 Nedre Vats (NO)
(72) Inventor: JAKOBSEN, Jonas Neraal, 5578 Nedre Vats (NO)
(74) Representative: Kilburn & Strode LLP

(57) **Abstract**

A robotic vehicle for an automated storage and retrieval system, the automated storage and retrieval system comprising a grid having a plurality of vertical columns for storage of bins therein, and a rail system located above the grid. The robotic vehicle comprising: a set of wheels for movement along the rail system; a lifting device; and a carton handling robot attached to the lifting device. The lifting device being configured for raising and lowering the carton handling robot relative to the robotic vehicle. The carton handling robot comprising: a platform for receiving cartons thereon; and a robotic arm coupled to the platform and configured for moving cartons to and from the platform in a horizontal direction.

## Description

### TECHNICAL FIELD

The disclosure relates to a robotic vehicle, to an automated storage and retrieval system comprising the same, and to an associated method.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

### SUMMARY

Aspects of the present disclosure are set out in the independent claims. Other aspects and features of the present disclosure are set out in the dependent claims and in the description below.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a perspective view of a frame bin and a carton according to the present disclosure;
Fig. 6 shows an isometric view of a carton handling robot according to the present disclosure;
Fig. 7 shows a close-up of a robotic arm and associated finger from Fig. 6;
Fig. 8 shows a telescopic robotic arm for use with the carton handling robot of Fig. 6;
Fig. 9 shows a robotic vehicle which includes a carton handling robot according to Fig. 6;
Fig. 10 shows an automated storage and retrieval system including the frame bin of Fig. 5 and the robotic vehicle of Fig. 9;
Fig. 11 shows a method of maneuvering cartons according to the present disclosure.

Like references are used for like components throughout the detailed description and the drawings.

### DETAILED DESCRIPTION

In some automated storage and retrieval systems, cartons of products may be stored in storage containers ("bins") of the system. A carton may be a low-cost container, which in use may contain a plurality of products, for example a plurality of products of the same type. Cartons may, for example, be used in automated storage and retrieval systems for business-to-business commerce. In such cases, cartons of products may be provided to customers, rather than individual product items. Accordingly, batches of products, rather than individual products, can be easily provided to customers using cartons. Because cartons are designed to be low-cost, they tend to be flimsy. They may, for example, be formed of cardboard. Picking up such cartons may therefore be difficult, particularly when they contain heavy products, because the cartons easily deform. Cartons may also not be provided with dedicated lifting attachments. Therefore, the inventors have found that where cartons are used in an automated storage and retrieval system, it may be preferable for the cartons to be moved into and out of bins horizontally, for example by sliding, rather than by lifting the cartons vertically.

Accordingly, in overview, the present disclosure provides carton handling solutions for moving items, such as cartons, into and/or out of bins horizontally, rather than vertically. This may be achieved through the use of a bin having open sides, thereby allowing horizontal movement of cartons into and out of the bin. A bin having opening sides will be described herein as a frame bin. Additionally or alternatively, horizontal movement of cartons may be achieved by providing a carton handling robot which is configured for moving cartons horizontally. The carton handling robot may for example be configured with robotic arms which are configured for moving cartons horizontally between the carton handling robot and a frame bin. Further, in order to integrate the carton handling robot in an automated storage and retrieval system, the carton handling robot may be attached to a robotic vehicle which is configured for travel along an upper surface of such an automated storage and retrieval system, and which may be configured to raise and lower the carton handling robot relative to the upper surface of the automated storage and retrieval system.

The above overview is provided to introduce, in simplified form, a selection of concepts that are further described herein. The presence of a feature in the overview does not imply that the feature is essential to the disclosure.

The present disclosure will now be described in general terms before implementations of the disclosure are described by way of example with reference to the drawings. The word "may" is used to refer to a feature that is optional, i.e. in some implementations of the disclosure, the feature is present, and in some implementations of the disclosure, the feature is not present.

The present disclosure provides a carton handling robot for an automated storage and retrieval system. The automated storage and retrieval system may comprise one or both of a grid having a plurality of vertical columns for storage of bins therein, and a rail system located above the grid. The carton handling robot may comprise one or more of: a platform for receiving cartons thereon; and a robotic arm coupled to the platform and configured for moving cartons to and from the platform in a horizontal direction. The carton handling robot may be attached to, or may be configured for attachment to, a robotic vehicle. The robotic vehicle may comprise one or more of: a set of wheels for movement along rails of the automated storage and retrieval system; a lifting device; and the carton handling robot. The carton handling robot may be attached to the lifting device. The lifting device may be configured for raising and lowering the carton handling robot relative to the robotic vehicle. Therefore, the present disclosure also provides a robotic vehicle having a carton handling robot attached to a lifting device thereof.

The carton handling robot may comprise a first robotic arm located on a first side of the platform, and a second robotic arm located on a second side of the platform, for engaging respective first and second sides of a carton. The or each robotic arm may be configured to move relative to the platform in the horizontal direction. The or each robotic arm may be telescopic for engaging cartons located adjacent to the platform. The or each robotic arm may comprise a finger which is rotatable from a vertical position, to a horizontal position in which it extends inwards to engage a carton. The finger(s) may be configured for sliding cartons in a horizontal direction relative to the platform. That is, the finger(s) may be configured to move in the horizontal direction along the edge of the platform to which they are attached. When the finger(s) are in the horizontal position and engaging a carton, horizontal movement of the robotic arm(s) relative to the platform will thereby horizontally move the carton relative to the platform. Alternative carton engagement means, e.g. carton engagement means other than fingers, may be provided.

The carton handling robot may also comprise a clamp or other attachment means coupled to the platform. The clamp or other attachment means may be configured to engage an adjacent structure, such as an adjacent frame bin, in order to secure the platform relative to the adjacent structure. Accordingly, movement of the carton handling robot relative to the adjacent structure while a carton is being moved horizontally, is prevented.

The present disclosure also provides an automated storage and retrieval system. The automated storage and retrieval system may comprise one or more of: a grid having a plurality of vertical columns for storage of bins therein; a rail system located above the grid; and a robotic vehicle according to the present disclosure, the robotic vehicle configured for travel along the rail system for conveying bins and/or cartons to and from the grid. As described above, the robotic vehicle may have a carton handling robot attached to a lifting device thereof.

The automated storage and retrieval system may also comprise a frame bin for storage in the grid, the frame bin comprising a base and four sides, the four sides defining a carton receiving space therebetween, wherein at least two of the sides have an opening formed therein. Each opening may be sized such that the carton can be passed through the opening. Each side of the frame bin may comprise an opening formed therein (that is, the frame bin may comprise four openings). The frame bin may comprise the base and four edge struts. Each edge strut may extend perpendicularly from a respective corner of the base to define a respective edge of the frame bin. The opening at each side of the frame bin may be defined between an adjacent pair of the edge struts. The frame bin may further comprise a lid, the lid suspended relative to the base by the struts. The frame bin may comprise at least one engagement structure configured for engagement with a gripping device for lifting of the frame bin.

The automated storage and retrieval system may also comprise a further robotic vehicle for movement along the rails. The further robotic vehicle may comprise one or more of: a set of wheels for movement along the rails; a lifting device; and a gripping device attached to the lifting device. The lifting device may be configured for raising and lowering the gripping device relative to the robotic vehicle. The gripping device may be configured to selectively engage an engagement structure of the frame bin.

The automated storage and retrieval system may also comprise a shelving unit adjacent to the grid, the shelving unit comprising a plurality of shelves for storage of cartons thereon. The automated storage and retrieval system may also comprise a corridor between the grid and the shelving unit, the corridor having a width selected to accommodate a frame bin or carton handling robot therein.

The present disclosure also provides a method of horizontally moving cartons in an automated storage and retrieval system. The method may comprise moving a carton handling robot to a position next to a frame bin; and using the carton handling robot to move a carton to or from the frame bin in a horizontal direction. The carton handling robot may itself be moveable both horizontally and vertically relative to the frame bin. Accordingly, moving the carton handling robot to the position next to the frame bin may comprise moving the carton handling robot vertically and/or horizontally relative to the frame bin. The method may also comprise, prior to moving the carton, securing the carton handling robot relative to the frame bin. This may be done by operating a clamp or other securing means of the carton handling robot. The carton handling robot may be attached to a lifting mechanism of a vehicle robot, and moving the carton handling robot to the position next to the frame bin may comprise operating the robotic vehicle to move the carton handling robot to the position next to the frame bin. Additionally or alternatively, the frame bin may be attached to a lifting mechanism of a vehicle robot, and moving the frame bin to the position next to the carton handling robot may comprise operating the robotic vehicle to move the frame bin to the position next to the carton handling robot. Operating the or each robotic vehicle may comprise one or both of: moving the robotic vehicle on a rail system; and lifting or lowering the frame bin or carton handling robot relative to the rail system.

The method may comprise: using a robotic vehicle according to the present disclosure, positioning a carton handling robot according to the present disclosure next to a frame bin according to the present disclosure (where the carton handling robot may be attached to the robotic vehicle); and, using the carton handling robot, moving a carton horizontally from a platform of the carton handling robot to a base of the frame bin or from the base of the frame bin to the platform of the carton handling robot. Positioning the carton handling robot according to the present disclosure next to the frame bin according to the present disclosure may additionally or alternatively comprise operating a robotic vehicle attached to the frame bin to move the frame bin to a position next to the carton handling robot. Herein, "next to" may mean adjacent to and horizontally aligned with.

Each possible combination of any of the above-described features forms part of the present disclosure. A plurality of instances of any feature may also be present. By way of example, implementations of the disclosure will now be described with reference to the drawings. Each possible combination of any features described below with any features described above also forms part of the disclosure.

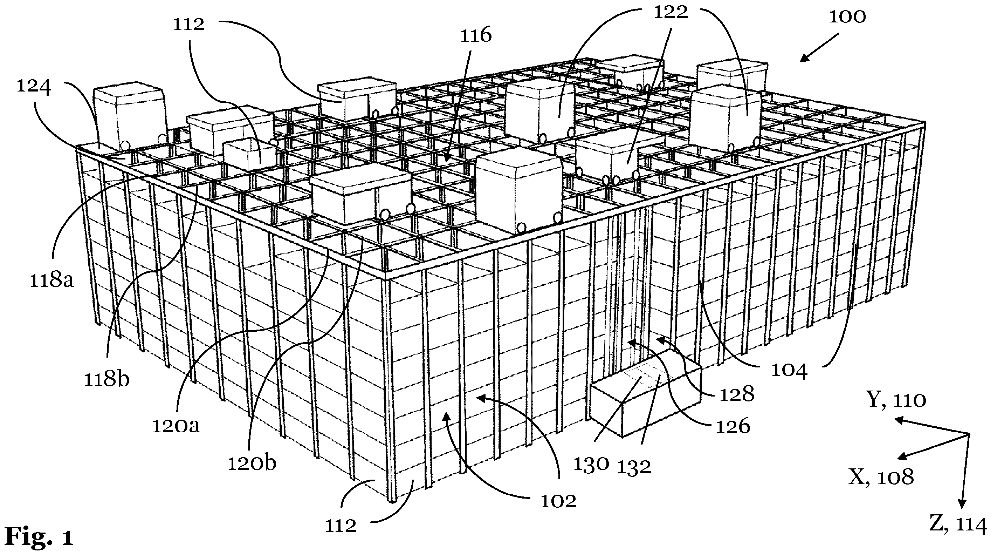

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114. Herein, the X and Y directions 108, 110 are horizontal directions. The Z direction 114 is the vertical direction.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

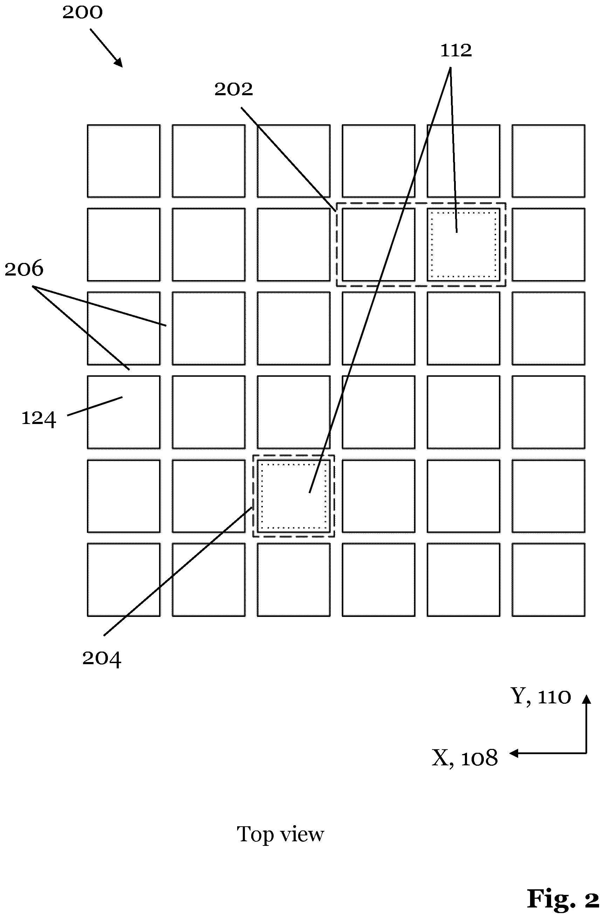

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

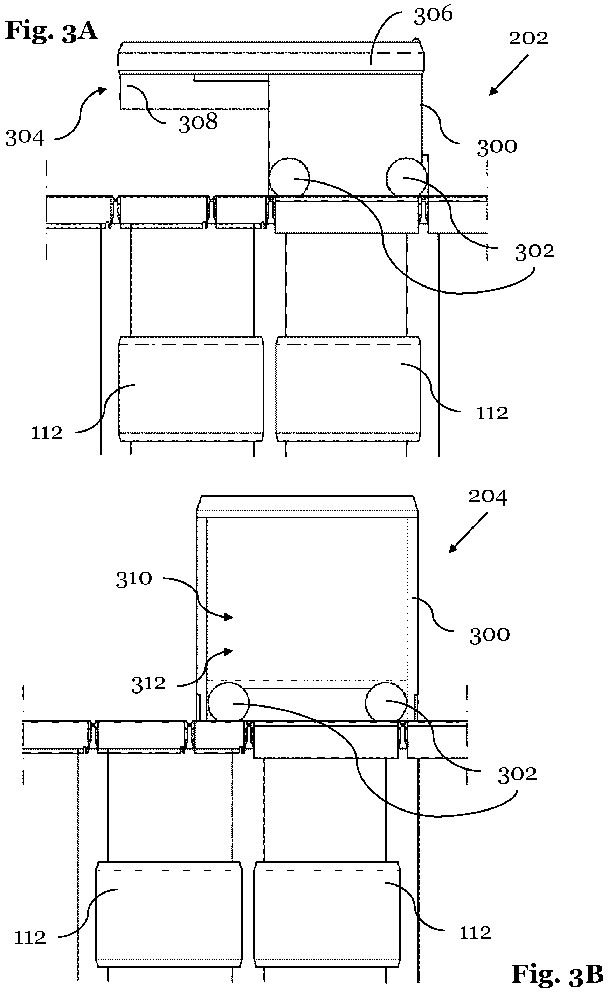

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

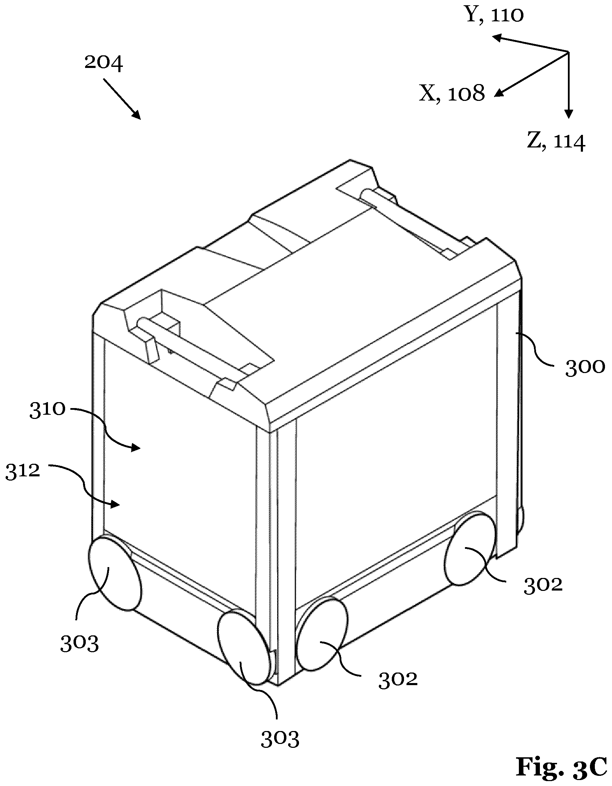

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

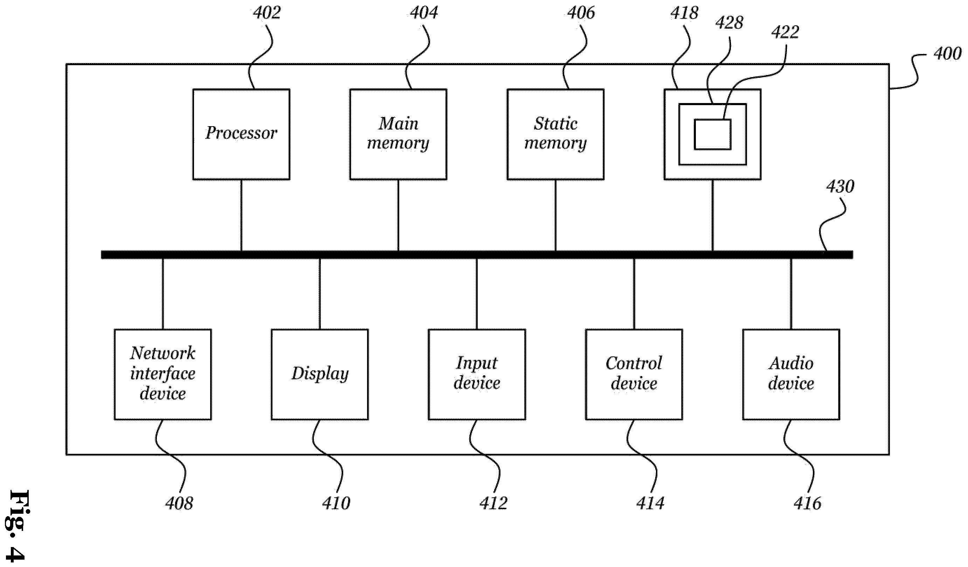

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

In the description above, bins 112 have been described. A bin 112 includes a base and four side-surfaces, and is open at the top. Accordingly, to remove items from bins 112, the items must be vertically lifted out of the bins 112. In many cases, this works very well. However, where cartons of items are to be stored in bins, this arrangement may not be optimal. For example, where the cartons are flimsy and/or contain heavy items, it may not be practicable to lift them from the bins. In such cases, a different approach is needed.

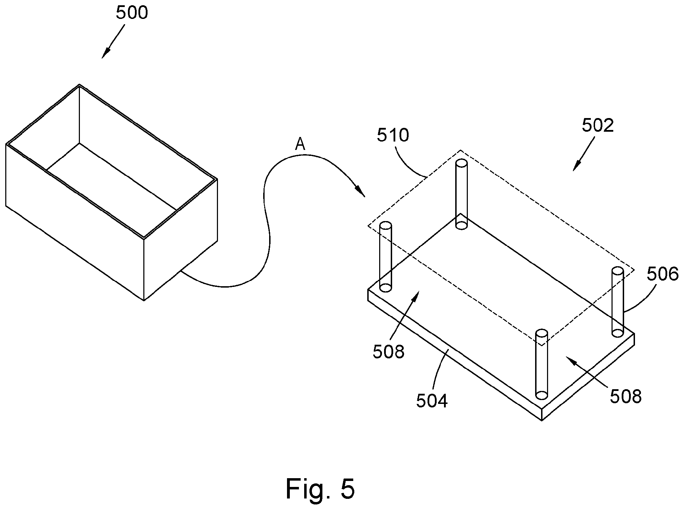

Fig. 5 shows a carton 500 according to the present disclosure. The carton is a lightweight, and low-cost, cardboard container. It is sized to fit within a bin 112 according to the present disclosure. The carton 500 is shown as being open-topped. However, in other examples, the carton 500 may also have a lid. Because the carton is large (typically, but not necessarily, of a comparable size to a bin 112), it can be used to store many items. Therefore, cartons 500 can be used for business-to-business commerce, in which product items are to be provided to customers in batches. As has been described above, however, it may not be practicable to vertically lift a carton 500 from a bin 112.

Accordingly, as also shown in Fig. 5, the present disclosure provides frame bins 502. Frame bins 502 have the same external dimensions as bins 112, and are stackable onto each other and onto bins 112. Therefore, frame bins 502 can be used in an automated storage and retrieval system which also includes bins 112. Moreover, frame bins 502 can be stored in vertical columns 102 of the grid 100, much like bins 112. However, frame bins 502 differ from bins 112 in that they are open at their side-surfaces. In particular, as shown, a frame bin comprises a base 504, and four edge struts 506 extending upwards from the base 504 to define vertical edges of the frame bin 502. The frame bin 502 is otherwise open at its side surfaces - with each adjacent pair of struts 506 defining an opening 508 therebetween, for four openings 508 in total (one at each side of the frame bin 502). Optionally, the frame bin also comprises a lid 510, the lid suspended above the base 504 by the struts 506.

As indicated by arrow A in Fig. 5, the carton 500 is placed into the frame bin 502 by sliding it horizontally through one of the openings 508, so that it rests on the base 504. Similarly, the carton 500 is removeable from the frame bin 502 by sliding it from the frame bin 502 through the same or another of the openings 508. In other words, by providing a frame bin 502 according to Fig. 5, cartons 500 can be horizontally moved into and out of the frame bin 502, and do not need to be lifted. Moreover, because the frame bin 502 can be stored in the grid 100 just as the bins 112, cartons 500 therefore can also be stored in the grid 100 using the frame bins 502.

Each carton 500 has a comparable size to that of the frame bins 502. However, the outer dimensions of the cartons 500 are at least slightly smaller than those of the openings 508, so that the cartons 500 can be placed into and removed from the frame bins 502 in the horizontal direction. For example, at least one of the outer dimensions of the carton may be at least 50%, for example at least 60%, such as at least 75%, of a corresponding outer dimension of the frame bin 504. Each outer dimension of the carton 500 may be less than a corresponding inner dimension of a corresponding opening 508 in the frame bin 502.

Although not shown in Fig. 5, either the struts 506 or the lid 510 of the frame bin 502 include engagement structures (not sown) for engagement by the gripping device 308 of a robotic vehicle 202, such that the frame bin 502 can be picked up and moved within the grid 100 by a robotic vehicle 202. Therefore, the frame bin 502 - and by extension the carton 500 - can be fully integrated into the automated storage and retrieval system of the present disclosure.

As the reader will understand, a plurality of frame bins 502 could be provided in an automated storage and retrieval system according to the present disclosure. In some examples, the grid 100 may exclusively contain frame bins 502. In other examples, the grid 100 may contain a mixture of frame bins 502 and bins 112. Some or all of the frame bins 502 in the grid 100 may have a carton 500 stored therein.

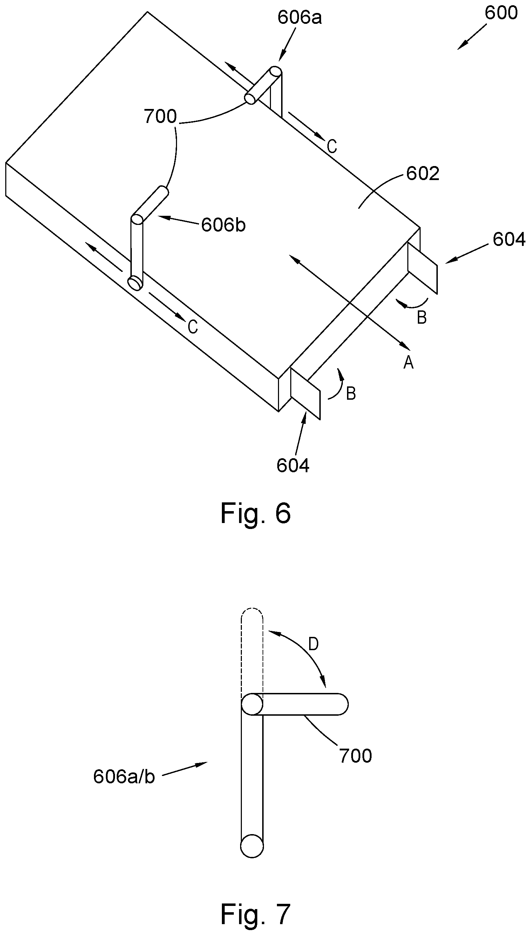

Fig. 6 shows a carton handling robot 600 according to the present disclosure. The carton handling robot 600 includes a platform 602, a clamp 604, and a pair of robotic arms 606a, 606b.

The platform 602 comprises an upper surface which is sized to receive a carton 500 thereon.

The clamp is 604 is located along an edge of the platform 602, at one end of the carton handling robot 600. The clamp 604 comprises opposing clamping surfaces which are configured to rotate inwards (towards one another, as shown by arrows B) when the platform 602 is located next to an adjacent structure (not shown in Fig. 6). By rotating inwards, the clamping surfaces of the clamp 604 secure the platform 602 to the adjacent structure, in order to thereby prevent the container handling robot 600 from moving relative to the adjacent structure when a carton 500 is being moved onto or away from the platform 602. Typically, the adjacent structure may be a frame bin 502, and the clamping surfaces 604 may be configured to engage the base 504 of the frame bin 502 when rotated inwards, to thereby secure the platform 602 relative to the base 504. As the reader will understand, a coupling mechanism other than the clamp 604 may be used to secure the container handling robot 600. When the platform 602 is secured to the adjacent structure, a carton can then be safely and securely moved onto or away from the platform 602 in horizontal direction A. As the reader will understand, the clamp maybe dispensed with in some examples, for example situations in which the frame bin and the container handling robot are otherwise secured relative to one another.

In order to horizontally move a carton 500 relative to the platform 602, opposing robotic arms 606a, 606b are provided at respective opposing lateral sides of the platform 602. The sides of the platform 602 to which the robotic arms 606a, 606b are attached are adjacent to and perpendicular with the edge of the platform which includes the clamp 604. As shown with arrows C, each robotic arm 606a, 606b is moveable horizontally along the edge to which it is attached, in order to thereby move a carton relative to the platform 602 in direction A (which is parallel with direction C). Therefore, the robotic arms 606a, 606b can be used to move a carton 502 onto the platform 602, or off of the platform 602, in the horizontal direction.

As shown in Fig. 6, and more closely shown in Fig. 7, each robotic arm 606a, 606b comprises a finger 700 which is rotatable in direction D between a vertical position, and a horizontal position in which the finger points inwards towards the opposing robotic arm. In the vertical position, the finger is disengaged from the carton 500. In the horizontal position, the finger engages the carton 500 for moving the carton 500 in the horizontal direction. The fingers 700 are shown in the horizontal position in Fig. 6.

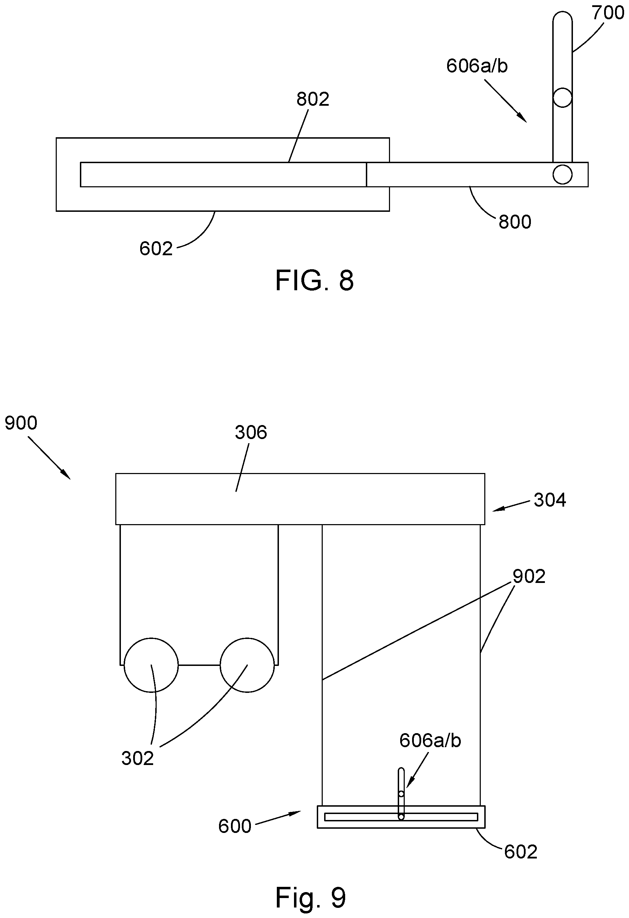

As shown in Fig. 8, each robotic arm 606a, 606b may be provided on a telescopic member 800, the telescopic member 800 being mounted to a runner 802 along the edge of the platform 602. The telescopic member is configured to slide relative to the runner 802, so as to extend the robotic arm 606a, 606b beyond the edge of the platform 802 (e.g. beyond the edge of the platform 802 which includes the clamp 604) in order to engage a carton which is located adjacent to the platform 602, such as on a frame bin 502 located next to the platform. Accordingly, the robotic arms 606a, 606b are able to retrieve a carton 500 located adjacent the platform 602 (for example on a frame bin 502) and move the carton onto the platform 602, as well as move a carton 500 from the platform 602 to the frame bin 502. As shown, the telescopic arm 800 extends in the horizontal direction, such that movement of the carton 500 is in the horizontal direction.

In a further example (now shown in Figs. 6-8), a further pair of robotic arms may be provided on the other two opposing lateral edges of the platform 602. Accordingly, while the pairs of robotic arms 606a, 606b can be used to move cartons 500 horizontally in direction A relative to the platform 602, the further pair of robotic arms can be used to move cartons 500 horizontally in a horizontal direction which is perpendicular to direction A. The further pair of robotic arms may have the same structure as the robotic arms 606a, 606b described above. Accordingly, by having the two pairs of robotic arms, a carton can be moved onto or away from the platform 602 in either of the horizontal directions, as required.

As has been described, frame bins 502 are moveable within the automated storage and retrieval system, and to/from the grid 100, using the robotic vehicles 202. Moreover, frame bins 502 are moveable vertically relative to the grid 100 using the lifting devices 304 of the robotic vehicles 202, and are moveable horizontally along the grid 100 by moving the robotic vehicles 202 along the rail system 116. Furthermore, cartons 500 are moveable to/from frame bins 502 in a horizontal direction, using the carton handling robot 600, which may be placed at any suitable place in the grid 100, for example at a location on the rail system 116.

Fig. 9 shows a modified robotic vehicle 900 according to the present disclosure, which includes a carton handling robot 600 attached to it. Accordingly, the modified robotic vehicle 900 is configured to move the carton handling robot 600 itself both vertically and horizontally relative to the grid 100. The features of the robotic vehicle 900 in many respects are the same as or correspond to the robotic vehicle 202. However, rather than including a gripping device 308, the lifting device is instead attached to the platform 602 of the carton handling robot 600. Accordingly, the lifting device 304 is operable to raise and lower the carton handling robot 600 relative to the grid 100.

Through the provision of the robotic vehicle 900 of Fig. 9, the carton handling robot 600 can thereby be freely moved relative to the grid 100, in both the horizontal and vertical directions. Accordingly, once a carton 500 has been horizontally removed from a frame bin 502 to the platform 602 of the carton handling robot 600 coupled to the robotic vehicle 900, the carton 500 can then be moved in the horizontal and/or vertical directions to an onwards location by the robotic vehicle 900. The carton handling robot 600 is attached to the lifting device 304 by steel bands 902 for lifting and lowering of the carton handling robot 600.

Beneficially, because the robotic vehicle 900 is of the same vehicle design as the robotic vehicles 202, it can be used seamlessly with the robots 202. That is to say, both robotic vehicles 900 and robotic vehicles 202 can travel concurrently on the rail system 116.

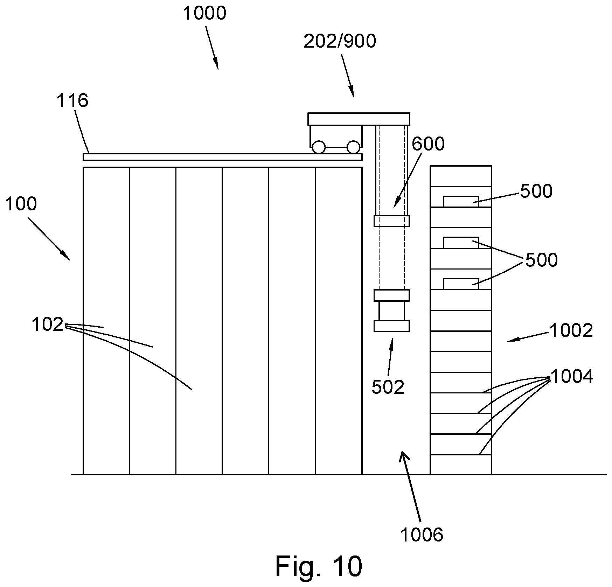

Fig. 10 shows an automated storage and retrieval system 1000 according to the present disclosure. The system 1000 includes a grid 100 comprising vertical columns 102, a rail system 116 located at the top of the grid 100, robots 202 and 900 provided to travel along the rail system 116, a shelving unit 1002 located adjacent to the grid 100, and a corridor 1006 located between the grid 100 and the shelving unit 1002. The shelving unit 1002 includes vertically stacked shelves 1004, which are configured for receiving cartons 500 thereon.

Also shown on Fig. 10 are a frame bin 502 and a carton handling robot 600. Frame bin 502 is suspended from a robotic vehicle 202, and carton handling robot 600 is suspended from a robotic vehicle 900.

As shown in Fig. 10, the robotic vehicles 202, 900 are operable to lower the frame bin 502 and the carton handling robot 600 into the corridor. Once lowered into the corridor, the carton handling robot 600 can be vertically maneuverered until it is level with the frame bin 502, and can then be used to move a carton 500 from a shelf 1004 to the frame bin 502, or from the frame bin 502 to a shelf 1004. Accordingly, using the robotic vehicles 202, 900, cartons 500 can be conveyed to and from the grid 100, for example between the grid 100 and the shelving unit 1002.

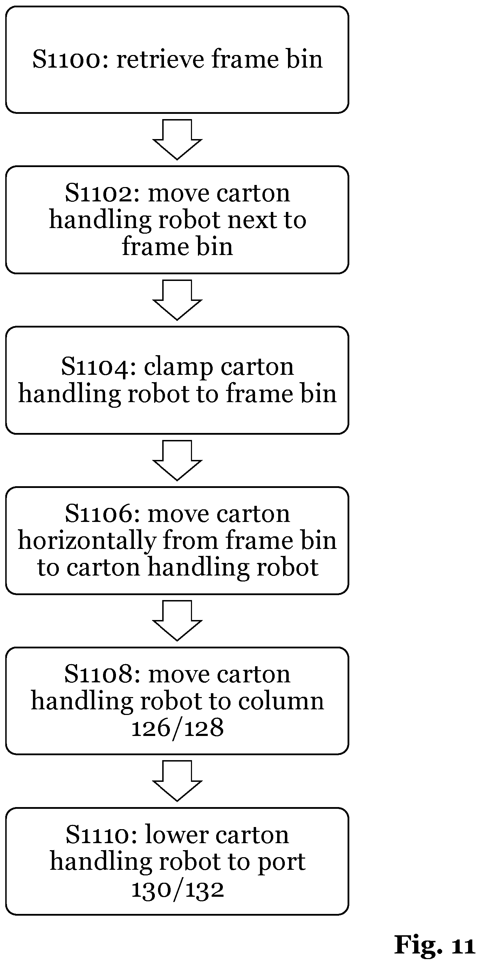

In an alternative arrangement, the vehicle 900 could be added to the system of Fig. 1, and used to convey cartons 500 between the grid 100 and the ports 130/132. This will be described in more detail in Fig. 11.

Fig. 11 shows a method of maneuvering cartons according to the present disclosure.

At step S1100, a frame bin 502 is removed from the grid 100 using a robotic vehicle 202. To do this, the robotic vehicle 202 moves to the vertical column 102 in which the frame bin 502 is located. The robotic vehicle 202 then lowers its gripping device 308 towards the frame bin 502, and grips the frame bin. The robotic vehicle then raises the gripping device 308, lifting the frame bin with it, until the frame bin 502 is located above the rail system 116, at the same level as the robotic vehicle 202.

At step S1102, a carton handling robot 600 is moved to a position next to (i.e. alongside) the frame bin 502. To do this, the robotic vehicle 900 moves to a location next to the robotic vehicle 202, such that the carton handling robot 600 is alongside the frame bin 502.

At step S1104, the carton handling robot 600 is operated to cause the clamp 604 to engage the frame bin 502, thereby securing the platform 602 relative to the frame bin 502 and preventing movement relative to one another.

At step S1106, the carton handling robot 600 is operated to cause the robotic arms 606a, 606b to move a carton 500 horizontally from the base 504 to the platform 602.

At step S1108, the robotic vehicle 900 is operated to move along the rail system 116 to a location above one of the port columns 126, 128.

At step S1110, the robotic vehicle 900 is operated to lower the carton handling robot 600, with the carton 500 located thereon, down one of the port columns 126, 128 and towards a corresponding port 130/132, at which location the carton 500 maybe removed from the carton handling robot.

Accordingly, the method of Fig. 11 can be used to move a carton 500 from the grid 100 to one of the ports 130/132. As the reader will understand, steps 1100 to 1110 could be performed in reverse, in order to move a carton 500 from the port 130/132 to the grid 100.

Aspects of the present disclosure are set out below. Each item below corresponds to an aspect of the disclosure, and each possible combination of any of the items corresponds to an aspect of the disclosure. When items are combined, two or more instances of an element with the same name are to be understood as referring to the same element, even if the element is introduced by the word "a" more than once. Each possible combination of any features from the items below with any features described above also forms part of the disclosure.
Clause 1 A carton handling robot, the carton handling robot comprising:
   a platform configured to receive a carton thereon; and
   a robotic arm coupled to the platform, the arm configured for moving cartons to and from the platform in a horizontal direction.
Clause 2 The carton handling robot of clause 1, wherein the carton handling robot comprises an engagement structure configured for engagement with a gripping device of a robotic vehicle.
Clause 3 A robotic vehicle for an automated storage and retrieval system, the automated storage and retrieval system comprising a grid having a plurality of vertical columns for storage of bins therein, and a rail system located above the grid, the robotic vehicle comprising:
   a set of wheels for movement along the rails;
   a lifting device; and
   a carton handling robot according to clause 1 or clause 2 attached to the lifting device.
Clause 4 Carton handling apparatus for handling cartons in an automated storage and retrieval system, the automated storage and retrieval system comprising a grid having a plurality of vertical columns for storage of bins therein, the carton handling apparatus comprising:
   a frame bin for storage in the automated storage and retrieval system, the frame bin comprising a base and four sides, the four sides defining a carton receiving space therebetween, wherein at least two of the sides have an opening formed therein; and
   a carton handling robot, the carton handling robot comprising:
      a platform configured to receive the frame bin thereon; and
      a robotic arm coupled to the platform and configured to extend through a first of the openings and to move a carton from the carton receiving space through a second of the openings.
Clause 5 Carton handling apparatus for handling cartons in an automated storage and retrieval system, the automated storage and retrieval system comprising a grid having a plurality of vertical columns for storage of bins therein, the carton handling apparatus comprising:
   a frame bin, the frame bin comprising a base and four sides, the four sides defining a carton receiving space therebetween, wherein at least two of the sides have an opening formed therein; and
   a robotic arm coupled to the base and configured to extend through a first of the openings and to move a carton from the carton receiving space through a second of the openings.
Clause 6 A method of moving a carton to or from a frame bin in a horizontal direction, the method comprising:
   positioning a carton handling robot next to the frame bin; and
   using the carton handling robot to move a carton to or from the frame bin in a horizontal direction.
Clause 7 The method of clause 6, wherein the carton handling robot is attached to a robotic vehicle configured for movement on rails of an automated storage and retrieval system, the robotic vehicle comprising a lifting device for raising and lowering the carton handling robot relative to the robotic vehicle.
Clause 8 The method of clause 7, wherein positioning the carton handling robot next to the frame bin comprises raising or lowering the carton handling robot using the lifting device until the carton handling robot is positioned next to the frame bin.

Each possible combination of any features from the implementations described above forms part of the present disclosure. It is to be understood that this description is intended to be illustrative, and not restrictive. Many other implementations will be apparent to those of skill in the art upon reading and understanding this description. Although the present disclosure has been described with reference to specific implementations, it will be recognized that the disclosure is not limited to the implementations described, but can be carried out with modification and alteration. Accordingly, the specification and drawings are to be regarded in an illustrative sense rather than a restrictive sense. The scope of protection should, therefore, be determined with reference to the claims, along with the full scope of equivalents to which the claims are entitled.

## Claims

1. A robotic vehicle (900) for an automated storage and retrieval system, the automated storage and retrieval system comprising a grid (100) having a plurality of vertical columns (102) for storage of bins (112) therein, and a rail system (116) located above the grid, the robotic vehicle comprising:
a set of wheels (302) for movement along the rail system;
a lifting device (304); and
a carton handling robot (600) attached to the lifting device;
wherein the lifting device is configured for raising and lowering the carton handling robot relative to the robotic vehicle; and
wherein the carton handling robot comprises:
a platform (602) for receiving cartons thereon; and
a robotic arm (606a/b) coupled to the platform and configured for moving cartons (500) to and from the platform in a horizontal direction.

2. The robotic vehicle of claim 1, wherein the robotic arm is configured to move relative to the platform in the horizontal direction.

3. The robotic vehicle of claim 1 or claim 2, wherein the robotic arm is telescopic for engaging cartons located adjacent to the platform.

4. The robotic vehicle of any preceding claim, further comprising a clamp (604) coupled to the platform, the clamp configured for securing the platform relative to an adjacent structure, such as a frame bin.

5. The robotic vehicle of any preceding claim, wherein the carton handling robot comprises a first robotic arm (606a) located on a first side of the platform, and a second robotic arm (606b) located on a second side of the platform, for engaging respective first and second sides of a carton.

6. The robotic vehicle of any preceding claim, wherein the or each robotic arm comprises a finger (700) which is rotatable from a vertical position, to a horizontal position in which it extends inwards to engage a carton, the fingers configured for sliding cartons in a horizontal direction relative to the platform.

7. An automated storage and retrieval system, comprising:
a grid (100) having a plurality of vertical columns (102) for storage of bins (112) therein;
a rail system (116) located above the grid; and
a robotic vehicle (900) according to any preceding claim, the robotic vehicle configured for travel along the rail system for conveying cartons (500) to and from the grid.

8. The system of claim 7, further comprising a frame bin (502) for storage in the grid, the frame bin comprising a base (504) and four sides, the four sides defining a carton receiving space therebetween, wherein at least two of the sides have an opening formed therein.

9. The system of claim 8, wherein each side of the frame bin comprises an opening formed therein.

10. The system of claim 8 or claim 9, wherein the frame bin comprises the base and four edge struts (506), each edge strut extending perpendicularly from a respective corner of the base to define a respective edge of the frame bin, wherein the opening at each side of the frame bin is defined between an adjacent pair of the edge struts.

11. The system according to claim 10, wherein the frame bin further comprises a lid (510), the lid suspended relative to the base by the struts.

12. The system according to any of claims 8 to 11, wherein the frame bin comprises at least one engagement structure configured for engagement with a gripping device (308) for lifting of the frame bin.

13. The system according to any of claims 8 to 12, comprising a further robotic vehicle (122) for movement along the rail system, the further robotic vehicle (122) comprising:
a set of wheels (302) for movement along the rail system;
a lifting device (304); and
a gripping device (308) attached to the lifting device;
wherein the lifting device is configured for raising and lowering the gripping device relative to the robotic vehicle; and
wherein the gripping device is configured to selectively engage an engagement structure of the frame bin.

14. The system according to any of claims 7 to 13, further comprising a shelving unit (1002) adjacent to the grid, the shelving unit comprising a plurality of shelves (1004) for storage of cartons thereon.

15. A method of moving a carton (500) to or from a frame bin (502) using a robotic vehicle (900) according to any of claims 1-6, the method comprising:
using the robotic vehicle, positioning the carton handling robot next to a frame bin; and
using the carton handling robot, moving a carton horizontally from the platform to a base of the frame bin, or from the base of the frame bin to the platform;
optionally wherein the frame bin and the robotic vehicle are part of a system (1000) according to any of claims 8 to 14; and
optionally wherein positioning the carton handling robot next to a frame bin comprises operating the robotic vehicle and/or the further robotic vehicle (202) such that the frame bin is located next to the carton handling robot.
